# EUROPEAN PATENT APPLICATION

(11) **EP 2 859 786 A1**
(43) Date of publication of application: **15.04.2015**
(21) Application number: 12878627.4
(22) Date of filing: 06.12.2012
(51) Int. Cl.: A01D 34/81, A01D 34/73, A01D 34/63

(54) **SHOCK ABSORPTION DEVICE OF SAFETY PLATE FOR SHRUB TRIMMER**

(30) Priority: 07.06.2012 KR 20120061195
(71) Applicant: Dong Myeong Co., Ltd., Jeollanam-do 617-913 (KR)
(72) Inventor: LIM, Jihoon, Damyang-gun Jeollanam-do 617-913 (KR); LIM, Byoung Joon, Buk-gu Gwangju 500-171 (KR)
(74) Representative: Vossius & Partner
(86) International application number: PCT/KR2012/010553
(87) International publication number: WO 2013/183828

(57) **Abstract**

The present invention relates to a shock absorption device of a safety plate for a shrub trimmer provided with a safety plate mounted on the lower portion of a blade in order to protect the blade, and provides a shock absorption device of a safety plate for a shrub trimmer, comprising: an upper safety plate support member formed at the upper portion of a safety plate for supporting a blade; and a lower safety plate support member coupled to the upper safety plate support member for supporting the safety plate; wherein safety plate rotation-restraining means are formed to correspond to each other on an inner periphery of a through hole of the safety plate and an outer periphery of the upper safety plate support member or the lower safety plate support member, and a rotation preventing die is fixed to a handle in order to prevent the rotation of the lower safety plate support member. According to the present invention, if a shock generated by a collision between the blade and debris is transmitted to the safety plate, by the safety plate and the upper safety plate support member or the lower safety plate support member provided with the safety plate rotation-restraining means, concave grooves of the rotation-restraining means move over elastic protrusions corresponding to each other such that the safety plate rotates in the direction that the shock is applied. Therefore, the shock is absorbed and the debris is deflected simultaneously, thereby preventing damage to the blade or the safety plate.

## Description

### TECHNICAL FIELD

The present invention relates to a shock absorption device of safety plate for grass mower, and more particularly, a shock absorption device of safety plate for preventing a safety plate, which is mounted on a lower part of grass mower for protecting a mowing blade, from being harmed or damaged since a shock generated by collision between foreign object and the mowing blade in use is transmitted to the safety plate as it is.

### BACKGROUND ART

In general, a grass mower is an apparatus for removing a lot of weeds with a less effort when performing a mowing work at the time of visiting ancestors' graves. The grass mower can cut weeds or vine of a wide area in a short time by rotating a mowing blade with a power device.

However, there is a disadvantage that since the blade rotates at a high speed, failure and damage to worker or nearby people due to fragments of the blade may be occur in a case where the blade collides with hard foreign object such as stones.

Therefore, it is hoped that the blade is protected by adding a safety plate mounted below the blade for protecting the blade; however, a shock applied to the foreign object by the blade is transmitted to the safety plate as it is, thereby damaging the safety plate, in a case where the safety plate is fixed.

Therefore, there has been developed a shock absorption device of safety plate for grass mower for preventing the damage to the safety plate by absorbing the shock applied to the safety plate, as disclosed in Korean Patent Application 10-2010-0056800.

In the shock absorption device of safety plate for grass mower, shock absorption members (4) are hooked and installed on both ends of spring member (2), wherein a lower section of the shock absorption members (4) is formed as a ring-shaped coupling part (6) and an upper section is formed as a hook part (3), and cut-out part is formed between the coupling part (6) and the hook part (3).

### SUMMARY OF THE INVENTION

### Technical problem

As above, the safety plate for grass mower has a structure where the safety plate absorbs the shock by being slightly rotated leftward and rightward by the elastic means and then being restored, or a structure where the safety plate is strongly produced and thus is not damaged even by the shock. However, the two ways described above are all only way of restraining the rotation of safety plate and have disadvantages as follows; in the case of the former, if the shock applied to the safety plate exceeds a limit value of the elastic means, a restoring force is reduced and thus an effect of absorption of the shock is rather lowered, and in the case of the latter, for providing durability for the safety plate to overcome the shock, a very thick metal plate has to be used, whereby the weight is increased and thus the degree of fatigue of the worker is much increased.

### Solution to the problem

For achieving the above object, the present invention is characterized in that it includes a safety plate mounted below a blade for protecting the blade; an upper safety plate-supporting member formed above the safety plate for supporting the blade; a lower safety plate-supporting member coupled to the upper safety plate-supporting member for supporting the safety plate; safety plate rotation-restraining means which are formed on an inner periphery of a through hole of the safety plate and an outer periphery of the upper safety plate-supporting member or the lower safety plate-supporting member to correspond to each other; and a rotation-preventing member which is fixed to a handle in order to prevent the rotation of the lower safety plate-supporting member.

The present invention is characterized in that the safety plate rotation-restraining means comprise a plurality of elastic protrusions which are formed with a constant distance from each other on the inner periphery of the central through hole of the safety plate, and a plurality of concave grooves which are formed on the outer periphery of the upper safety plate-supporting member or the lower safety plate-supporting member to correspond to the elastic protrusions of the safety plate.

The present invention is characterized in that the safety plate rotation-restraining means comprise a plurality of concave grooves which are formed on the inner periphery of the central through hole of the safety plate, and a plurality of protrusions which are formed on the outer periphery of the upper safety plate-supporting member or the lower safety plate-supporting member to correspond to the concave grooves of the safety plate.

### Effects of the invention

According to the present invention, if the shock generated by collision between the blade and the foreign object is transmitted to the safety plate, by the safety plate and the upper safety plate-supporting member or lower safety plate-supporting member each provided with the safety plate rotation-restraining means, the safety plate rotates in a direction of application of the shock while the concave grooves of the safety plate rotation-restraining means momentarily pass over the elastic protrusions corresponding thereto, whereby the shock is absorbed and at the same time the foreign object bounces off the safety plate; therefore, the blade or safety plate is prevented from being damaged.

The present invention allows the rotation of the safety plate, but the rotation of safety plate occurs only when the amount of shock exceeds an elastic limit point of the elastic protrusion, so that a fairish shock can be absorbed. Furthermore, work is easy since unnecessary rotation of the safety plate is prevented, and finally, the present invention is an invention capable of minimizing a failure of the grass mower.

### BRIEF DESCRIPTION OF THE DRAWINGS

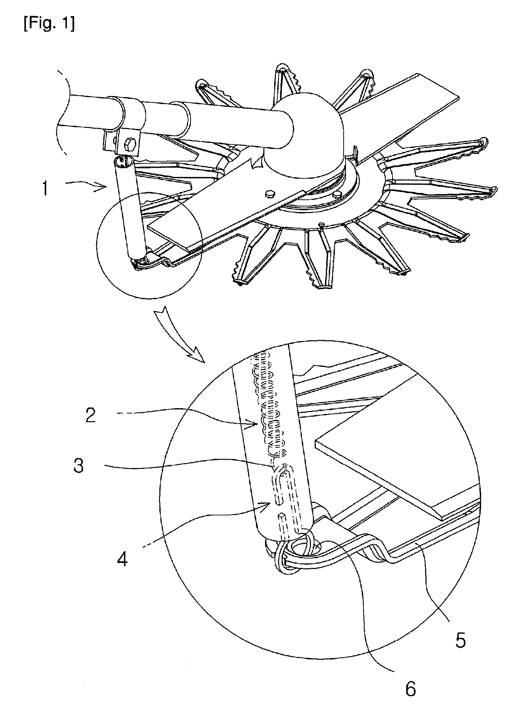

Fig. 1 is a perspective view illustrating a shock absorption device of safety plate in a conventional grass mower;

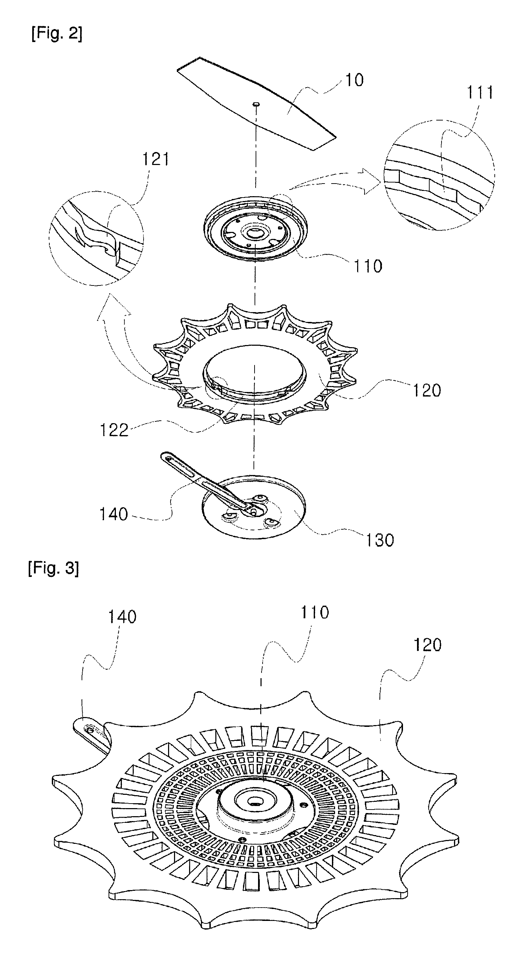

Fig. 2 is an exploded perspective view illustrating a shock absorption device of safety plate according to the present invention;
Fig. 3 is an assembled perspective view of Fig. 2 with a blade being omitted;

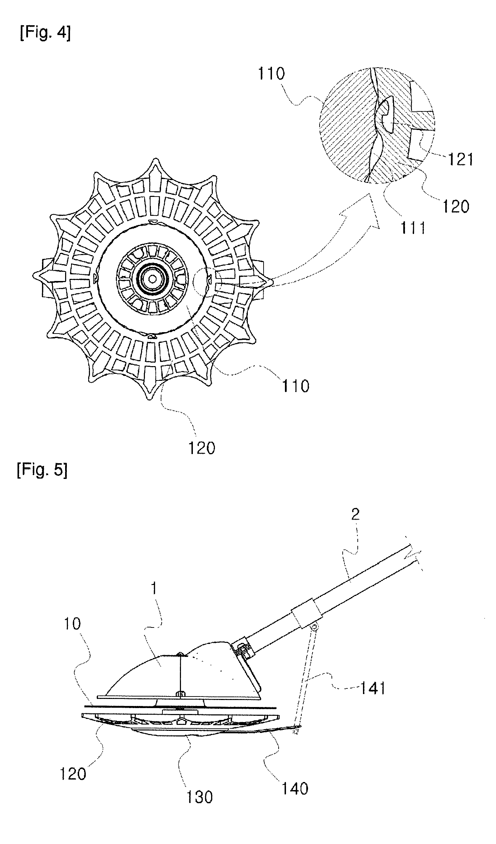

Fig. 4 is a sectional view illustrating safety plate rotation-restraining means according to the present invention; and
Fig. 5 is a reference view illustrating a state where the safety plate rotation-restraining means according to the present invention is mounted on a grass mower.

### BEST MODES FOR CARRYING OUT THE INVENTION

The present invention provides a shock absorption device of safety plate for grass mower provided with a safety plate mounted below a blade for protecting the blade, comprising: an upper safety plate-supporting member formed above the safety plate for supporting the blade; a lower safety plate-supporting member coupled to the upper safety plate-supporting member for supporting the safety plate; safety plate rotation-restraining means which are formed on an inner periphery of a through hole of the safety plate and an outer periphery of the upper safety plate-supporting member or the lower safety plate-supporting member to correspond to each other; and a rotation-preventing member which is fixed to a handle in order to prevent the rotation of the lower safety plate-supporting member.

The configuration of the present invention will be described in detail with reference to the attached drawings as follows.

The present invention includes a safety plate (120) mounted below a blade (10) for protecting the blade (10); an upper safety plate-supporting member (110) formed above the safety plate (120) for supporting the blade (10); a lower safety plate-supporting member (130) coupled to the upper safety plate-supporting member for supporting the safety plate (120); safety plate rotation-restraining means which are formed on an inner periphery of a through hole of the safety plate (120) and an outer periphery of the upper safety plate-supporting member (110) or the lower safety plate-supporting member (130) to correspond to each other; and a rotation- preventing member (140) which is fixed to a handle (2) in order to prevent the rotation of the lower safety plate-supporting member (130).

Preferably, the safety plate rotation-restraining means includes a plurality of elastic protrusions (121) which are formed with a constant distance from each other on the inner periphery of the central through hole of the safety plate (120), and a plurality of concave grooves (111) which are formed on the outer periphery of the upper safety plate-supporting member (110) or the lower safety plate-supporting member (130) to correspond to the elastic protrusions (121) of the safety plate (120).

However, in the present invention, regarding the forming of the safety plate rotation-restraining means, a plurality of concave grooves (111) may be formed on the inner periphery of the through hole of the safety plate (120) and a plurality of elastic protrusions (121) may be formed on the outer periphery of the upper safety plate-supporting member (110) or the lower safety plate-supporting member (130) to correspond to the concave grooves (111) of the safety plate (120).

In this connection, the most preferable structure in the present invention is a structure where the plurality of concave grooves (111) are formed on the upper safety plate-supporting member (110) and the plurality of elastic protrusions (121) are formed on the safety plate (120).

Although the safety plate rotation-restraining means may consist of the elastic protrusions (121) and the concave grooves (111) as described above, the rotation of safety plate (120), of course, may be restrained by means of braking means(not illustrated) using a known belt or disc type utilizing frictional force.

Furthermore, in the present invention, in a case of mowing work which does not require the safety plate (120), the safety plate (120) is separated by separating the upper safety plate-supporting member (110) and the lower safety plate-supporting member (130) and then only the upper safety plate-supporting member (110) and the lower safety plate-supporting member (130) may be coupled again and then used.

As above, the present invention having the above-described configuration has been described with respect to the limited embodiment, however, the present invention is not limited to it, and various modifications and alterations may be made by those skilled in the art within the scope of technical concepts of the present invention and the scope of claims described below and equivalents thereof.

### Industrial applicability

The present invention allows a mowing work to be safely performed by the shock absorption device of safety plate absorbing the shock and thus protecting the safety plate even if the foreign object collides with the safety plate when using the mowing blade since the shock absorption device of safety plate is installed on the grass mower.

## Claims

1. A shock absorption device of safety plate for grass mower provided with a safety plate mounted below a blade for protecting the blade, comprising:
an upper safety plate-supporting member formed above the safety plate for supporting the blade;
a lower safety plate-supporting member coupled to the upper safety plate-supporting member for supporting the safety plate;
safety plate rotation-restraining means which are formed on an inner periphery of a through hole of the safety plate and an outer periphery of the upper safety plate-supporting member or the lower safety plate-supporting member to correspond to each other; and
a rotation-preventing member which is fixed to a handle in order to prevent the rotation of the lower safety plate-supporting member.

2. The shock absorption device of safety plate for grass according to claim 1, wherein the safety plate rotation-restraining means comprise a plurality of elastic protrusions which are formed with a constant distance from each other on the inner periphery of the central through hole of the safety plate, and a plurality of concave grooves which are formed on the outer periphery of the upper safety plate-supporting member or the lower safety plate-supporting member to correspond to the elastic protrusions of the safety plate.

3. The shock absorption device of safety plate for grass according to claim 1, wherein the safety plate rotation-restraining means comprise a plurality of concave grooves which are formed on the inner periphery of the central through hole of the safety plate, and a plurality of protrusions which are formed on the outer periphery of the upper safety plate-supporting member or the lower safety plate-supporting member to correspond to the concave grooves of the safety plate.
